# EUROPEAN PATENT SPECIFICATION

(11) **EP 3 540 986 B1**
(45) Date of publication and mention of the grant of the patent: **10.07.2024**
(21) Application number: 17862198.3
(22) Date of filing: 28.04.2017
(51) Int. Cl.: H04J 3/16

(54) **METHOD AND APPARATUS FOR ODU SERVICE SCHEDULING, AND COMPUTER STORAGE MEDIUM**
VERFAHREN UND VORRICHTUNG ZUR ODU-DIENSTPLANUNG UND COMPUTERSPEICHERMEDIUM
PROCÉDÉ ET APPAREIL DE PLANIFICATION DE SERVICE ODU ET SUPPORT DE STOCKAGE INFORMATIQUE

(30) Priority: 21.10.2016 CN 201610920470
(43) Date of publication of application: 18.09.2019
(73) Proprietor: Sanechips Technology Co., Ltd., Shenzhen, Guangdong 518055 (CN)
(72) Inventor: LIU, Qingkui, Shenzhen Guangdong 518055 (CN); QU, Henan, Shenzhen Guangdong 518055 (CN)
(74) Representative: Regimbeau
(86) International application number: PCT/CN2017/082627
(87) International publication number: WO 2018/072425

(56) References cited:
- EP-A1- 2 093 916
- CN-A- 102 893 629
- CN-A- 103 248 509
- CN-A- 103 561 359
- CN-A- 103 997 387
- TOM HUBER CORIANT GMBH & CO KG GERMANY: "2-stage ODU SMP protocol operation in beyond 100G networks;C 0542", ITU-T DRAFT ; STUDY PERIOD 2013-2016, INTERNATIONAL TELECOMMUNICATION UNION, GENEVA ; CH, vol. 9/15, 11 March 2014 (2014-03-11), pages 1 - 3, XP044075160
- MAARTEN VISSERS HUAWEI TECHNOLOGIES CO ET AL: "Clarification of B100G working assumption A11 (below 10G ODUk multiplexing);C 909", ITU-T DRAFT ; STUDY PERIOD 2013-2016, INTERNATIONAL TELECOMMUNICATION UNION, GENEVA ; CH, vol. 11/15, 10 November 2014 (2014-11-10), pages 1 - 4, XP044075415
- MALCOLM BETTS ZTE P R C: "Draft revised Recommendation ITU-T G.872 (for consent 30 September 2016);TD 576 (PLEN/15)", vol. 12/15, 23 August 2016 (2016-08-23), pages 1 - 69, XP044180766, Retrieved from the Internet <URL:https://www.itu.int/ifa/t/2013/sg15/docs/160919/td/plen/T13-SG15-160919-TD-PLEN-0576!!MSW-E.docx> [retrieved on 20160823]

## Description

### TECHNICAL FIELD

The present invention relates to the field of communications and, in particular, to a method and apparatus for ODU service scheduling, and a computer storage medium.

### BACKGROUND

With the development of intelligent mobile terminals, the Internet of Things (IoT) has rapidly increasing requirements on 4G and 5G network coverage, broadband access, high-definition video, and bearer network market bandwidth. At the same time, demand for B100G has been spawned in the market with the development of cloud computing, cloud storage, big data, as well as data exchange and interconnection between clouds and between cloud and terminal. The B 100G service cannot be directly loaded on the existing optical channel data unit-k (k = 2, 3, 4). In this view, the ITU formulates an optical channel data unit-Cn (ODUCn) mapping of the B 100G service. However, new devices need to support old devices at the same time, so the new devices will contain the ODUCn mapping and an ODUk mapping at the same time. This requires scheduling multiple low order optical channel data unit-j (ODUj) service into both the ODUk and ODUCn for mapping.

At present, in order to implement compatibility with the previous design, a scheme in which a bus is used for transmission of the ODUk mapping channel and another bus is used for transmission of the ODUCn mapping channel is adopted. This scheme enlarges the scale of the implemented design. Therefore, a solution for ODU service scheduling is desired for implementing hybrid mapping of ODUk and ODUCn through one bus.

The following documents represent relevant prior art: ITU-T DRAFT ; STUDY PERIOD 2013-2016, INTERNATIONAL TELECOMMUNICATION UNION, GENEVA ; CH, vol. 9/15, 11 March 2014 (2014-03-11), pages 1-3, XP044075160. MAARTEN VISSERS HUAWEI TECHNOLOGIES CO ET AL: "Clarification of B100G working assumption A11 (below 10G ODUk multiplexing);C 909",ITU-T DRAFT ; STUDY PERIOD 2013-2016, INTERNATIONAL TELECOMMUNICATION UNION, GENEVA ; CH, vol. 11/15, 10 November 2014 (2014-11-10), pages 1-4.

### SUMMARY

In view of this, embodiments of the present invention provide a method and apparatus for an ODU service scheduling, and a computer storage medium, so as to implement hybrid mapping of ODUk and ODUCn through one bus.

Solutions of the embodiments of the present invention are implemented as described below.

An embodiment of the present invention provides a method for ODU service scheduling, which includes:
acquiring a value n of an ODUCn, and distributing low order ODUj data to be mapped to a number n of ODUk mapping channels and an ODUCn mapping channel;
mapping the ODUj data distributed to the ODUk mapping channels onto an ODUk service, and outputting ODUk data;
combining the ODUk data and the ODUj data distributed to the ODUCn mapping channel and obtaining combined ODUj data; and
mapping the combined ODUj data onto an ODUCn service and mapping the ODUj data distributed to the ODUCn mapping channel onto the ODUCn service.

In the above solution, before mapping the ODUj data distributed to the ODUk mapping channels onto the ODUk service, the method further includes:
determining an ODUk mapping bit width according to a clock signal and a bit rate of the ODUk service;
adjusting a bit width of ODUj time division data in the ODUj data distributed to the ODUk mapping channels according to the ODUk mapping bit width.

In the above solution, before combining the ODUk data and the ODUj data distributed to the ODUCn mapping channel and obtaining the combined ODUj data, the method further includes:
adjusting a bit width of ODUk time division data in the ODUk data from an ODUk mapping bit width to a bit width of the ODUCn service.

In the above solution, before mapping the ODUj data distributed to the ODUk mapping channels onto the ODUk service, the method further includes:
counting valid data in the ODUj data, filtering the ODUj data and obtaining a smoothing rate according to a preset smoothing period; and
smoothing ODUj time division data in the ODUj data distributed to the ODUk mapping channels at the smoothing rate.

In the above solution, before mapping the combined ODUj data onto the ODUCn service, the method further includes:
converting a rate signal bit width of the combined ODUj data to a rate signal bit width of ODUCn data.

An embodiment of the present invention further provides an apparatus for ODU service scheduling, which includes: a port distribution module, an ODUk mapping module, a combination module and an ODUCn mapping module.

The port distribution module is configured to acquire a value n of an ODUCn, and distribute low order ODUj data to be mapped to a number n of ODUk mapping channels and an ODUCn mapping channel.

The ODUk mapping module is configured to map the ODUj data distributed to the ODUk mapping channels onto an ODUk service, and output ODUk data.

The combination module is configured to combine the ODUk data and the ODUj data distributed to the ODUCn mapping channels and obtain combined ODUj data.

The ODUCn mapping module is configured to map the combined ODUj data onto an ODUCn service and map the ODUj data distributed to the ODUCn mapping channel onto the ODUCn service.

In the above solution, the apparatus further includes a first conversion module, which is configured to:
determine an ODUk mapping bit width according to a clock signal and a bit rate of the ODUk service; and
adjust a bit width of ODUj time division data in the ODUj data distributed to the ODUk mapping channels according to the ODUk mapping bit width.

In the above solution, the apparatus further includes a second conversion module, which is configured to:
adjust a bit width of ODUk time division data in the ODUk data from an ODUk mapping bit width to a bit width of the ODUCn service.

In the above solution, the apparatus further includes a smoothing module, which is configured to:
count valid data in the ODUj data, filter the ODUj data and obtain a smoothing rate according to a preset smoothing period; and
smooth ODUj time division data in the ODUj data distributed to the ODUk mapping channels at the smoothing rate.

In the above solution, the apparatus further includes a third conversion module, which is configured to:
convert a rate signal bit width of the combined ODUj data to a rate signal bit width of ODUCn data.

When performing the processing, the port distribution module, the ODUk mapping module, the combination module and the ODUCn mapping module may be implemented by a central processing unit (CPU), a digital signal processor (DSP) or a field programmable gate array (FPGA).

An embodiment of the present invention further provides a computer storage medium, which is configured to store computer-executable instructions for executing the method for ODU service scheduling described above.

According to the method and apparatus for the ODU service scheduling in the embodiments of the present invention, a value n of an ODUCn is acquired, and low order ODUj data to be mapped is distributed to a number n of ODUk mapping channels and an ODUCn mapping channel; the ODUj data distributed to the ODUk mapping channels is mapped onto an ODUk service, and ODUk data is output; the ODUk data and the ODUj data distributed to the ODUCn map channel are combined and combined ODUj data is obtained; and the combined ODUj data is mapped onto an ODUCn service. In this way, n channels of high order ODUk and ODUCn services are output at the same time, and mapped n channels of ODUk data may be mapped onto the ODUCn. The implementation of hybrid mapping of ODUk and ODUCn through one bus possesses better flexibility, compatibility, inheritance, and reduced implementation costs.

### BRIEF DESCRIPTION OF DRAWINGS

FIG. 1 is a flowchart of a method for ODU service scheduling according to Embodiment One of the present invention;
FIG. 2 is a schematic diagram of an apparatus for ODU service scheduling according to Embodiment Two of the present invention;
FIG. 3 is a schematic diagram of another apparatus for ODU service scheduling according to Embodiment Two of the present invention;
FIG. 4 is a schematic diagram of an apparatus for ODU service scheduling according to Embodiment Three of the present invention; and
FIG. 5 is a flowchart of a method for ODU service scheduling according to Embodiment Four of the present invention.

### DETAILED DESCRIPTION

The implementation of the technical solution will be further described in detail with reference to the accompanying drawings.

### Embodiment One

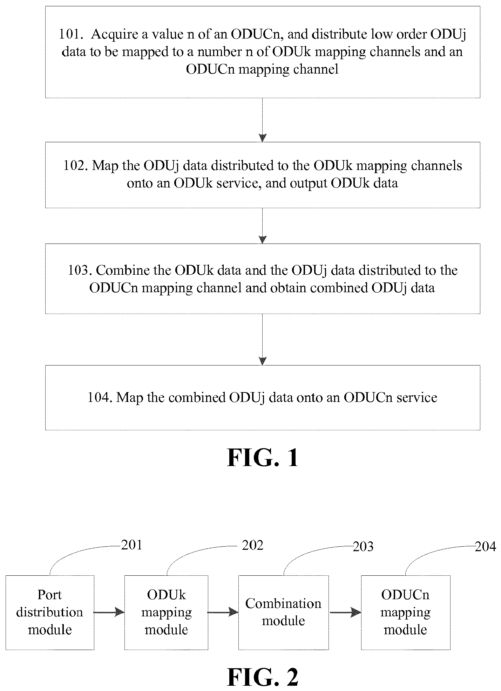

Embodiment one of the present invention provides a method for ODU service scheduling. As shown in FIG. 1, the method includes the steps described below.

In S101, a value n of an ODUCn is acquired, and low order ODUj data to be mapped is distributed to a number n of ODUk mapping channels and an ODUCn mapping channel.

When the ODUj data of the ODUj service is hybridly mapped onto an ODUk service and an ODUCn service, the value n of the ODUCn to be mapped is determined, and the ODUj data to be mapped is distributed to the number n of ODUk mapping channels according to port configuration corresponding to the ODUj service and port configuration corresponding to the ODUk service, thereby mapping the output ODUj data onto the number n of ODUk mapping channels. The ODUj data distributed to the number n of ODUk mapping channels is ODUj data of at most 80*n channels, and bandwidth of the ODUj data distributed to each ODUk mapping channel is unable to exceed ODUC1.

At the same time, the input ODUj data is distributed to the ODUCn mapping channel according to the port configuration corresponding to the ODUj service and the port configuration corresponding to the ODUCn service, thereby mapping onto the ODUCn.

In S102, the ODUj data distributed to the ODUk mapping channels is mapped onto the ODUk service, and ODUk data is output.

Before mapping the ODUj data distributed to the ODUk mapping channels to the ODUk service, the method further includes that, an ODUk mapping bit width is determined according to a clock signal and a bit rate of the ODUk service; a bit width of ODUj time division data in the ODUj data distributed to the ODUk mapping channels is adjusted according to the ODUk mapping bit width.

For ODCCn, each ODUC1 is 100G, a number 20 of 5G slots are provided, and each slot is 16 bytes. Therefore, the bit width of the ODUj time division data of ODUj data distributed to the ODUk mapping channels is n*16 bytes, which are big bit width data, and a bite rate of the ODUk data at most has a number 80 of 1.25G slots, and each slot is 1 byte. In this case, the smaller the bit width of time division data input to the ODUk mapping is, the simpler the ODUk time division mapping process is and less resources are consumed, but the larger the clock frequency is. On the contrary, the larger the bit width of the time division data is, the more complex the ODUk time division mapping process is and more resources are consumed, but the smaller the clock frequency is. Here, according to the clock signal and the bit rate of the ODUk service, the ODUk mapping bit width is determined, and the bit width of the time division data mapped by the input ODUk is determined. The clock cycle used for the determination of the ODUk mapping bit width may be a clock parameter such as a clock frequency and a clock cycle of a clock signal.

To keep consistent with the ODUCn, a processing bit width selected for ODUk mapping is 16 bytes, so a number 16 of 1.25G slots are needed to be processed in one clock cycle, and the bit width of ODUj time division data in the ODUj data distributed to the ODUk mapping channels is adjusted to 16 bytes. In this case, in the conversion from a big bit width to a small bit width, an input to a cache area has a bit width of n*16 bytes, and an output from the cache area has a bit width of 16 bytes, which may increase cache to store the input ODUj time division data.

After the input ODUj time division data is converted from time division data with the large bit width to time division data with the small bit width, the ODUj data distributed to the ODUk mapping channels is mapped onto the ODUk service, and is output through the ODUk mapping. The output data is ODUk data after the ODUk mapping. The output ODUk data may be directly output, or may then be mapped onto the ODUCn service.

Here, when mapping the output ODUk data onto the ODUCn service, the ODUk time division data may be small bit width data of the ODUk mapping bit width, for example, the bit width of 16 bytes.

In this embodiment, before the ODUj data distributed to the ODUk mapping channels is mapped onto the ODUk service, the method further includes that, valid data in the ODUj data is counted, the ODUj data is filtered and a smoothing rate is obtained according to a preset smoothing period; and ODUj time division data in the ODUj data distributed to the ODUk mapping channels is smoothed at the smoothing rate.

The ODUk data on each channel at most has a number 80 of 1.25G slots. In the smoothing of the time division data, the input data is smoothed and written into the cache according to a number x of 80 clock cycles. Here, x is a smoothing coefficient and may be configured by a user. The number x of 80 clock cycles is a preset smoothing cycle. When the input data is written into the cache according to the number x of 80 clock cycles, in the number x of 80 clock cycles, the valid number of the input data is counted, values output by the filter are subject to sigma-delta calculation and then the data in the cache is read out. The read-out data is the smoothed data, which can reduce a cache depth of the ODUk mapping.

In S103, the ODUk data and the ODUj data distributed to the ODUCn mapping channel are combined and the combined ODUj data is obtained.

After the ODUk data is obtained, the ODUk time division data is written into the cache, the written data is read out according to an invalid gap of the ODUj time division data distributed to the ODUn mapping channel, two channels of data are combined into one. At the same time, rate data of ODUk and a rate signal of ODUj in the ODUCn mapping channel are combined according to port space division, thereby implementing combination of the ODUk data and ODUj data distributed to the ODUk mapping channels and obtaining the combined ODUj data.

Here, before the ODUk data and the ODUj data distributed to the ODUCn mapping channel are combined and the combined ODUj data is obtained, the method further includes that, a bit width of ODUk time division data in the ODUk data is adjusted from an ODUk mapping bit width to a bit width of the ODUCn service. When the ODUk data and the ODUj data distributed to the ODUk mapping channels are combined and mapped onto the ODUCn, the ODUk time division data in the ODUk data may be small bit width data. In this case, the bit width of the ODUk time division data is the ODUk mapping bit width. The conversion from the bit width of the ODUk time division data to the bit width of the ODUCn time division data implements the conversion from the small bit width data to the large bit width data.

In S104, the combined ODUj data is mapped onto the ODUCn service.

Here, before the combined ODUj data is mapped onto the ODUCn service, the method further includes that, a rate signal bit width of the combined ODUj data is converted to a rate signal bit width of ODUCn data. The rate signal of the combined ODUj data is 1.25G/slot (the rate is 1.25G per slot) while the rate signal of the ODUCn data is 5G/slot, the rate signal bit width of 1.25G/slot is converted into the rate signal bit width of 5G/slot. Here, different numbers of slots of the input ODUj data may lead to different converted bit widths. When the number of the slots of the input ODUj data is s, a total bit width after conversion is t, where t is obtained by rounding up division of s by 4. Specifically, an ODUj rate signal representing bit width of one slot is: 1.25G/system clock = m bits. The conversion of one 1.25G/slot into 5G/slot least to a bit width of 4*m bits, the conversion of two 1.25G/slot into 5G/slot leads to a bit width of 4*m bits, the conversion of three 1.25G/slot into 5G/slot also leads to the bit width of 4*m bits, the conversion of four 1.25G/slot into 5G/slot also leads to the bit width of 4*m bits, the conversion of five 1.25G/slot into 5G/slot leads to a bit width of 8*m bits, the conversion of six 1.25G/slot into 5G/slot also leads to the bit width of 8*m bits, and so on.

Through the method for ODU service scheduling provided by the embodiment of the present invention, a mapping process in which the multi-channel low order ODUj service is scheduled to the ODUk service and the ODUCn service is completed. In the scheduling process, (1) a bit width of a bus for time division data is selected to be n* 128 bits according to the value n of the ODUCn, and transmission is performed at 1.25G/slot; (2) a number n of channels of high order ODUk data and a number n of channels of high order ODUCn data are output at the same time, and the n channels of the mapped ODUk data may be mapped on the ODUCn; (3) the ODUj time division data is smoothed after bit width conversion, so as to reduce a cache depth of the ODUk mapping; (4) various parameters may be configured, and arbitrary scheduling from low order ODUj to high order ODUk and ODUCn is implemented. The whole implementation process is simple and flexible for use. The device for mapping by the scheduling method in the embodiment of the present invention implements hybrid mapping of ODUk and ODUCn through one bus, thereby processing better flexibility, compatibility, inheritance, and reduced implementation costs.

### Embodiment Two

An embodiment of the present invention further provides an apparatus for ODU service scheduling. As shown in FIG. 2, the apparatus includes a port distribution module 201, an ODUk mapping module 202, a combination module 203 and an ODUCn mapping module 204.

The port distribution module 201 is configured to acquire a value n of an ODUCn, and distribute low order ODUj data to be mapped to a number n of ODUk mapping channels and an ODUCn mapping channel.

The ODUk mapping module 202 is configured to map the ODUj data distributed to the ODUk mapping channels onto an ODUk service, and output ODUk data.

The combination module 203 is configured to combine the ODUk data and the ODUj data distributed to the ODUCn mapping channels and obtain combined ODUj data.

The ODUCn mapping module 204 is configured to map the combined ODUj data onto an ODUCn service.

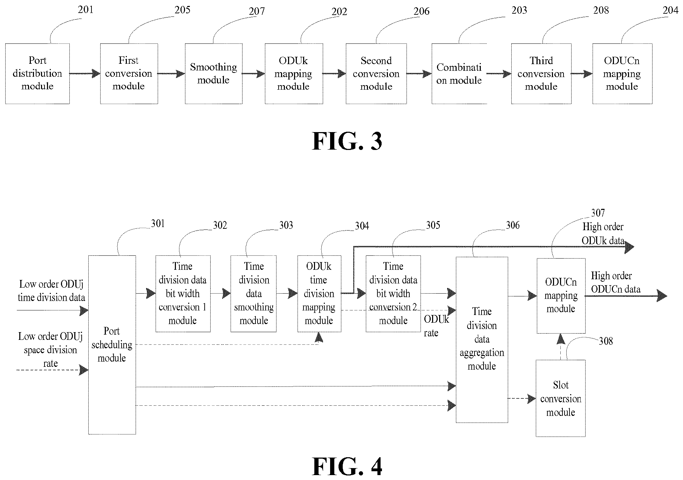

As shown in FIG. 3, the apparatus further includes a first conversion module 205 configured to:
determine an ODUk mapping bit width according to a clock signal and a bit rate of the ODUk service; and
adjust a bit width of ODUj time division data in the ODUj data distributed to the ODUk mapping channels according to the ODUk mapping bit width.

The apparatus further includes a second conversion module 206 configured to:
adjust a bit width of ODUk time division data in the ODUk data from an ODUk mapping bit width to a bit width of the ODUCn service.

The apparatus further includes a smoothing module 207 configured to:
count valid data in the ODUj data, filter the ODUj data and obtain a smoothing rate according to a preset smoothing period; and
smooth ODUj time division data in the ODUj data distributed to the ODUk mapping channels at the smoothing rate.

The apparatus further includes a third conversion module 208 configured to:
convert a rate signal bit width of the combined ODUj data to a rate signal bit width of ODUCn data.

### Embodiment Three

In the embodiment of the present invention, the method for the ODU service scheduling provided by the embodiment of the present invention is further illustrated through the apparatus shown in FIG. 4. As shown in FIG. 4, the apparatus includes a port scheduling module 301, a time division data bit width conversion 1 module 302, a time division data smoothing module 303, an ODUk time division mapping module 304, a time division data bit width conversion 2 module 305, a time division data aggregation module 306, an ODUCn time division mapping module 307, and a slot conversion module 308. Illustration of the various modules is described below.

The port scheduling module 301 distributes, according to the port configuration, the input low order ODUj service to n (n = 1, 2, 3, ...) channels of high order ODUk service (k = 2, 3, 4) and a high order ODUCn (n = 1, 2, 3, ...) mapping channel.

The time division data bit width conversion 1 module 302 converts the time division data with a large bit width to the time division data with a small bit width.

The time division data smoothing module 303 smooths the converted time division data according to the configured slot cycle.

The ODUk time division mapping module 304 maps the time division low order ODUj service onto the high order ODUk (k = 2, 3, 4) service.

The time division data bit width conversion 2 module 305 converts the time division data with the small bit width to the time division data with the large bit width.

The time division data aggregation module 306 combines the mapped ODUk (k = 2, 3, 4) time division data and low order ODUj time division data distributed by the port scheduling module to one channel of ODUj time division data.

The ODUCn time division mapping module 307 maps the combined ODUj time division data onto the high order ODUCn (n = 1, 2, 3, ...) service.

The slot conversion module 308 converts a rate of the combined ODUj from 1.25G/slot to 5G/slot of the ODUCn.

### Embodiment Four

In the embodiment of the present invention, the method for the ODU service scheduling provided by the embodiment of the present invention is illustrated through specific application examples in conjunction with the apparatus shown in FIG. 4. Here a specific application example is provided in which ODUj time division data of a number p of ports is input to n (n = 1, 2, 3, ...) channels of ODUk (k = 2, 3, 4) and ODUCn (n = 1, 2, 3, ...) for mapping. The ODUj service has a minimum rate of 1.25G and a maximum rate of n*100G.

It is to be noted that a service with the maximum service rate is an ODUCn service. Each ODUC1 is 100G. There are a number 20 of 5G slots, and each slot is 16 bytes. So a bit width of a bus for ODUj time division data is set to be n*16 bytes. A rate signal of the ODU service is transmitted in a space division manner, each ODUj port is 1 bit and totally p bits are provided. Since the minimum service rate is 1.25G and only occupies one 1.25G/slot, the rate signal is selected according to the rate of 1.25G/slot. An ODUj rate signal of one slot represents a bit width of 1.25G/system clock = m bits. The rate signal of two slots represents a bit width of 2*m bits, and so on. Then total n*20*(5G/1.25G) = 80*n slots are provided. One slot on a time division line corresponds to one clock, so a time division data bus circulates according to 80*n clock cycles.

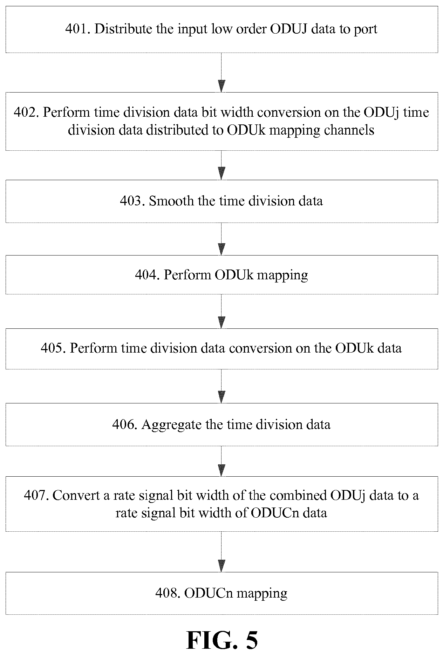

As shown in FIG. 5, the method specifically includes steps described below.

In S401, the input low order ODUj data is distributed to a port.

The input low order ODUj data includes ODU time division data and a ODUj space division rate. According to the configured port number, the input ODUj time division data and the rate signal are distributed respectively to the number n (n = 1, 2, 3, ...) of ODUk (k = 2, 3, 4) mapping channels and an ODUCn (n = 1, 2, 3, ...) mapping channel.

This step is implemented through the port scheduling module 301 shown in FIG. 3.

In S402, bit width conversion of time division data is performed on the ODUj time division data distributed to ODUk mapping channels.

Specifically, the conversion from a large bit width to a small bit width is implemented. A bit width of the ODUj time division data distributed to the ODUk mapping channels is n*16 bytes while ODUk (k = 2, 3, 4) has at most a number 80 of 1.25G slots, and each slot has 1 byte. The smaller the bit width of time division data input to the ODUk mapping is, the simpler the ODUk time division mapping process is and less resources are consumed, but the larger the clock cycle is. On the contrary, the larger the bit width of the time division data is, the more complex the ODUk time division mapping process is and more resources are consumed, but the smaller the clock cycle is. To keep consistent with the ODUCn, a processing bit width selected by ODUk mapping is 16 bytes, so 16 1.25G slots are needed to be processed in one clock. Here, when the ODUj time division data of n*16 bytes is converted into 16 bytes, the conversion from the large bit width to the small bit width requires addition of cache to store data.

This step is implemented through the time division data bit width conversion 1 module 302 shown in FIG. 3.

In S403, time division data is smoothed.

The time division data after bit width conversion is written into another cache. The data is stored in the cache according to port. Since each channel of ODUk (k = 2, 3, 4) at most has a number 80 of 1.25G slots, data of the ODUk may be smoothed and written into the cache according to a number x of 80 slots. Here, x is a smoothing coefficient and may be configured by a user.

Here, in the number x of 80 clock cycles, valid number of the input data is counted, values output by the filter are subject to sigma-delta calculation and then the data in the cache is read. The read-out data is the smoothed data, which can reduce a cache depth of the ODUk (k = 2, 3, 4) mapping.

It is to be noted that 2 caches are used in both S402 and S403, and here, a read cache mechanism may be modified, thereby using different read cache mechanisms when reading data of each port, which enables one cache is used to implement reading and writing of two caches, thereby saving cache resources.

This step may be implemented through the time division data smoothing module 303 shown in FIG. 3.

In S404, the ODUk mapping is performed.

The read-out ODUj data enters an ODUk (k=2,3,4) mapping module, according to a scheduled output space division rate signal, in a 80-frame cycle, valid rate signals are counted, then converted to generate Cm and Cnd values, and the data is mapped onto the ODUk (k=2,3,4). The ODUk (k=2,3,4) mapping needs to process data of 16 slots in one clock. As shown in FIG. 3, the mapped ODUk (k=2,3,4) data may be directly output, or may be further mapped onto the ODUCn service.

This step may be implemented through the ODUk time division mapping module 304 shown in FIG. 3.

In S405, time division data conversion is performed on ODUk data.

Specifically, the conversion from the small bit width to the large bit width is implemented. The mapped ODUk (k = 2, 3, 4) is time division data with the bit width of 16 bytes, which is then converted into 16*n bytes in the time division data bit width conversion 2 module.

This step is implemented through the time division data bit width conversion 2 module 305 shown in FIG. 3.

In S406, the time division data is aggregated.

The ODUk (k = 2, 3, 4) data after bit width conversion is written into the cache; two channels of data are combined into one through an invalid gap of the ODUj data distributed to an ODUCn (n = 1, 2, 3, ...) mapping channel. Meanwhile, the rate signal of ODUk (k = 2, 3, 4) and the rate signal of ODUj are combined according to port space division, so that the combined ODUj data is obtained.

This step may be implemented through the time division data aggregation module 306 shown in FIG. 3.

In S407, a rate signal bit width of the combined ODUj data is converted to a rate signal bit width of ODUCn data.

The ODUCn is 5G/slot, and the input rate signal is 1.25G/slot, so the rate signal bit width of 1.25G/slot is converted into the rate signal bit width of 5G/slot. The slot conversion module implements this function, i.e., the conversion of one 1.25G/slot into 5G/slot leads to a bit width of 4*m bits, the conversion of two 1.25G/slot to 5G/slot also leads to the bit width of 4*m bits, the conversion of three 1.25G/slot to 5G/slot also leads to the bit width of 4*m bits, the conversion of four 1.25G/slot to 5G/slot also leads to the bit width of 4*m bits, the conversion of five 1.25G/slot to 5G/slot also to a bit width of 8*m bits, the conversion of six 1.25G/slot to 5G/slot also leads to the bit width of 8*m bits, and so on.

This step is implemented through the slot conversion module 308 shown in FIG. 3.

In S408, ODUCn mapping is performed.

The combined ODUj data is input into an ODUCn (n = 1, 2, 3, ...) mapping module. Valid rate signals are counted within a 20-frame cycle based on space division rate signal after the slot conversion, and then are converted to generate Cm and Cnd values. The data is mapped onto the ODUCn (n = 1, 2, 3, ...). The ODUCn (n = 1, 2, 3, ...) mapping requires to process data of n slots in one clock cycle.

This step may be implemented through the ODUCn time division mapping module 307 shown in FIG. 3.

Through the above ODU service scheduling, a mapping process in which the multi-channel low order ODUj service is scheduled to the ODUk service and the ODUCn service is completed. The whole implementation process is simple and flexible for use.

In the embodiment of the present invention, an apparatus corresponding to the apparatus provided in the Embodiment Two may correspond to the circuit apparatus provided in the Embodiment Three. Specifically, the port distribution module 201 corresponds to the port scheduling module 301, the ODUk mapping module 202 corresponds to the ODUk time division mapping module 304, the combination module 203 corresponds to the time division data aggregation module 306, the ODUCn mapping module 204 corresponds to the ODUCn time division mapping module 307, the first conversion module 205 corresponds to the time division data bit width conversion 1 module 302, the second conversion module 206 corresponds to the time division data bit width conversion 2 module 305, the smoothing module 207 corresponds to the time division data smoothing module 303, and the third conversion module 208 corresponds to the slot conversion module 308.

An embodiment of the present invention further provides a computer storage medium, which is configured to store computer-executable instructions for executing the method for ODU service scheduling described above.

It should be understood by those skilled in the art that the embodiments of the present invention may be provided as methods, systems, or computer program products. Therefore, the present invention may adopt a form of a hardware embodiment, a software embodiment, or a combination of hardware and software embodiments. In addition, the present invention may adopt a form of a computer program product implemented on one or more computer-usable storage media (including, but not limited to, a disk memory, an optical memory, and the like) which include computer-usable program codes.

The present invention is described with reference to flowcharts and/or block diagrams of methods, devices (systems) and computer program products according to the embodiments of the present invention. It should be understood that computer program instructions may implement each flow and/or block in the flowcharts and/or block diagrams and a combination of flows and/or blocks in the flowcharts and/or block diagrams. These computer program instructions may be provided to a general-purpose computer, a special-purpose computer, an embedded processor or a processor of another programmable data processing device to produce a machine so that instructions executed by a computer or the processor of another programmable data processing device produce a means for implementing functions specified in one or more flows in the flowcharts and/or one or more blocks in the block diagrams.

These computer program instructions may also be stored in a computer-readable memory which may direct the computer or another programmable data processing device to operate in a particular manner so that the instructions stored in the computer-readable memory produce a manufactured product including an instructing means. The instructing means implements the functions specified in one or more flows in the flowcharts and/or one or more blocks in the block diagrams.

These computer program instructions may also be loaded onto the computer or another programmable data processing device so that a series of operation steps are performed on the computer or another programmable device to produce processing implemented by the computer. Therefore, instructions executed on the computer or another programmable device provide steps for implementing the functions specified in one or more flows in the flowcharts and/or one or more blocks in the block diagrams.

The above are only preferred embodiments of the present invention and are not intended to limit the scope of the present invention.

## Claims

1. A method for optical channel data unit, ODU, service scheduling, comprising:
acquiring a value n of an ODUCn, and distributing low order ODUj data to be mapped to a number n of ODUk mapping channels and an ODUCn mapping channel;
mapping the ODUj data distributed to the ODUk mapping channels onto an ODUk service, and outputting ODUk data;
combining the ODUk data and the ODUj data distributed to the ODUCn mapping channel and obtaining combined ODUj data; and
mapping the combined ODUj data onto an ODUCn service and mapping the ODUj data distributed to the ODUCn mapping channel onto the ODUCn service, wherein before mapping the ODUj data distributed to the ODUk mapping channels onto the ODUk service, the method further comprises:
determining an ODUk mapping bit width according to a clock signal and a bit rate of the ODUk service; and
adjusting a bit width of ODUj time division data in the ODUj data distributed to the ODUk mapping channels according to the ODUk mapping bit width.

2. The method of claim 1, before combining the ODUk data and the ODUj data distributed to the ODUCn mapping channel and obtaining the combined ODUj data, the method further comprises:
adjusting a bit width of time-division data ODUk in the ODUk data from an ODUk mapping bit width to a bit width of the ODUCn service.

3. The method of claim 1, before mapping the ODUj data distributed to the ODUk mapping channels onto the ODUk service, the method further comprises:
counting valid data in the ODUj data, filtering the ODUj data and obtaining a smoothing rate according to a preset smoothing period; and
smoothing ODUj time division data in the ODUj data distributed to the ODUk mapping channels at the smoothing rate.

4. The method of claim 1, wherein before mapping the combined ODUj data onto the ODUCn service, the method further comprises:
converting a rate signal bit width of the combined ODUj data to a rate signal bit width of ODUCn data.

5. An apparatus for optical channel data unit, ODU, service scheduling, comprising:
a port distribution module, an ODUk mapping module, a combination module and an ODUCn mapping module;
wherein the port distribution module is configured to acquire a value n of an ODUCn, and distribute low order ODUj data to be mapped to a number n of ODUk mapping channels and an ODUCn mapping channel;
the ODUk mapping module is configured to map the ODUj data distributed to the ODUk mapping channels onto an ODUk service, and output ODUk data;
the combination module is configure to combine the ODUk data and the ODUj data distributed to the ODUCn mapping channels and obtain combined ODUj data; and
the ODUCn mapping module is configured to map the combined ODUj data onto an ODUCn service and map the ODUj data distributed to the ODUCn mapping channel onto the ODUCn service,
wherein the apparatus further comprising a first conversion module configured to:
determine an ODUk mapping bit width according to a clock signal and a bit rate of the ODUk service; and
adjust a bit width of ODUj time division data in the ODUj data distributed to the ODUk mapping channels according to the ODUk mapping bit width.

6. The apparatus of claim 5, further comprising a second conversion module configured to:
adjust a bit width of time-division ODUk data in the ODUk data from an ODUk mapping bit width to a bit width of the ODUCn service.

7. The apparatus of claim 5, further comprising a smoothing module configured to:
count valid data in the ODUj data, filtering the ODUj data and obtain a smoothing rate according to a preset smoothing period; and
smooth ODUj time division data in the ODUj data distributed to the ODUk mapping channels at the smoothing rate.

8. The apparatus of claim 5, further comprising a third conversion module configured to:
convert a rate signal bit width of the combined ODUj data to a rate signal bit width of ODUCn data.

9. A computer storage medium, which is configured to store computer-executable instructions for executing the method for ODU service scheduling of any one of claims 1 to 4.

## Patentansprüche

1. Verfahren für eine optische Kanaldateneinheits(ODU)-Dienstplanung, das Folgendes umfasst:
Erfassen eines Wertes n einer ODUCn und Verteilen von ODUj-Daten niedriger Ordnung derart, dass sie einer Anzahl n von ODUk-Zuordnungskanälen und einem ODUCn-Zuordnungskanal zugeordnet sind;
Zuordnen der ODUj-Daten, die auf die ODUk-Zuordnungskanäle verteilt sind, zu einem ODUk-Dienst und Ausgeben von ODUk-Daten;
Kombinieren der ODUk-Daten und der ODUj-Daten, die auf den ODUCn-Zuordnungskanal verteilt sind, und Erhalten von kombinierten ODUj-Daten; und
Zuordnen der kombinierten ODUj-Daten zu einem ODUCn-Dienst und Zuordnen der ODUj-Daten, die auf den ODUCn-Zuordnungskanal verteilt sind, zum ODUCn-Dienst,
wobei das Verfahren vor dem Zuordnen der ODUj-Daten, die auf die ODUk-Zuordnungskanäle verteilt sind, zum ODUk-Dienst ferner Folgendes umfasst:
Bestimmen einer ODUk-Zuordnungsbitbreite gemäß einem Taktsignal und einer Bitrate des ODUk-Dienstes; und
Anpassen einer Bitbreite von ODUj-Zeitteilungsdaten in den ODUj-Daten, die auf die ODUk-Zuordnungskanäle verteilt sind, gemäß der ODUk-Zuordnungsbitbreite.

2. Verfahren nach Anspruch 1, wobei das Verfahren vor dem Kombinieren der ODUk-Daten und der ODUj-Daten, die auf den ODUCn-Zuordnungskanal verteilt sind, und dem Erhalten der kombinierten ODUj-Daten ferner Folgendes umfasst:
Anpassen einer Bitbreite von Zeitteilungsdaten ODUk in den ODUk-Daten von einer ODUk-Zuordnungsbitbreite auf eine Bitbreite des ODUCn-Dienstes.

3. Verfahren nach Anspruch 1, wobei das Verfahren vor dem Zuordnen der ODUj-Daten, die auf die ODUk-Zuordnungskanäle verteilt sind, zum ODUk-Dienst ferner Folgendes umfasst:
Zählen von gültigen Daten in den ODUj-Daten, Filtern der ODUj-Daten und Erhalten einer Glättungsrate gemäß einer voreingestellten Glättungsperiode; und
Glätten von ODUj-Zeitteilungsdaten in den ODUj-Daten, die auf die ODUk-Zuordnungskanäle verteilt sind, mit der Glättungsrate.

4. Verfahren nach Anspruch 1, wobei das Verfahren vor dem Zuordnen der kombinierten ODUj-Daten zum ODUCn-Dienst ferner Folgendes umfasst:
Umwandeln einer Ratensignalbitbreite der kombinierten ODUj-Daten in eine Ratensignalbitbreite von ODUCn-Daten.

5. Vorrichtung für eine optische Kanaldateneinheits(ODU)-Dienstplanung, die Folgendes umfasst: ein Portverteilungsmodul, ein ODUk-Zuordnungsmodul, ein Kombinationsmodul und ein ODUCn-Zuordnungsmodul;
wobei das Portverteilungsmodul dazu ausgelegt ist, einen Wert n einer ODUCn zu erfassen, und ODUj-Daten niedriger Ordnung derart zu verteilen, dass sie einer Anzahl n von ODUk-Zuordnungskanälen und einem ODUCn-Zuordnungskanal zugeordnet sind;
das ODUk-Zuordnungsmodul ist dazu ausgelegt, die ODUj-Daten, die auf die ODUk-Zuordnungskanäle verteilt sind, einem ODUk-Dienst zuzuordnen und ODUk-Daten auszugeben;
das Kombinationsmodul ist dazu ausgelegt, die ODUk-Daten und die ODUj-Daten, die auf die ODUCn-Zuordnungskanäle verteilt sind, zu kombinieren und kombinierte ODUj-Daten zu erhalten; und
das ODUCn-Zuordnungsmodul ist dazu ausgelegt, die kombinierten ODUj-Daten einem ODUCn-Dienst zuzuordnen und die ODUj-Daten, die auf den ODUCn-Zuordnungskanal verteilt sind, dem ODUCn-Dienst zuzuordnen,
wobei die Vorrichtung ferner ein erstes Umwandlungsmodul umfasst, das zu Folgendem ausgelegt ist:
Bestimmen einer ODUk-Zuordnungsbitbreite gemäß einem Taktsignal und einer Bitrate des ODUk-Dienstes; und
Anpassen einer Bitbreite von ODUj-Zeitteilungsdaten in den ODUj-Daten, die auf die ODUk-Zuordnungskanäle verteilt sind, gemäß der ODUk-Zuordnungsbitbreite.

6. Vorrichtung nach Anspruch 5, die ferner ein zweites Umwandlungsmodul umfasst, das zu Folgendem ausgelegt ist:
Anpassen einer Bitbreite von Zeitteilungs(ODUk)-Daten in den ODUk-Daten von einer ODUk-Zuordnungsbitbreite auf eine Bitbreite des ODUCn-Dienstes.

7. Vorrichtung nach Anspruch 5, die ferner ein Glättungsmodul umfasst, das zu Folgendem ausgelegt ist:
Zählen von gültigen Daten in den ODUj-Daten, Filtern der ODUj-Daten und Erhalten einer Glättungsrate gemäß einer voreingestellten Glättungsperiode; und
Glätten von ODUj-Zeitteilungsdaten in den ODUj-Daten, die auf die ODUk-Zuordnungskanäle verteilt sind, mit der Glättungsrate.

8. Vorrichtung nach Anspruch 5, die ferner ein drittes Umwandlungsmodul umfasst, das zu Folgendem ausgelegt ist:
Umwandeln einer Ratensignalbitbreite der kombinierten ODUj-Daten in eine Ratensignalbitbreite von ODUCn-Daten.

9. Computerspeichermedium, das dazu ausgelegt ist, computerausführbare Anweisungen zum Ausführen des Verfahrens für eine ODU-Dienstplanung nach einem der Ansprüche 1 bis 4 zu speichern.

## Revendications

1. Procédé de planification de service d'unité de données de canal optique (ODU) comprenant
acquérir une valeur n d'un ODUCn et la distribution de données ODUj d'ordre inférieur de telle sorte qu'elles soient associées à un nombre n de canaux d'association ODUk et à un canal d'association ODUCn ;
affecter les données ODUj réparties sur les canaux d'affectation ODUk à un service ODUk et émettre des données ODUk ;
combiner les données ODUk et les données ODUj réparties sur le canal d'affectation ODUCn et obtenir des données ODUj combinées ; et
affecter les données ODUj combinées à un service ODUCn et affecter les données ODUj réparties sur le canal d'affectation ODUCn au service ODUCn,
le procédé comprenant en outre, avant l'affectation des données ODUj réparties sur les canaux d'affectation ODUk au service ODUk, ce qui suit :
déterminer une largeur de bit d'allocation ODUk selon un signal d'horloge et un débit binaire du service ODUk ; et
ajuster une largeur de bit de données de répartition temporelle ODUj dans les données ODUj réparties sur les canaux d'allocation ODUk, conformément à la largeur de bit d'allocation ODUk.

2. Procédé selon la revendication 1, dans lequel, avant de combiner les données ODUk et les données ODUj réparties sur le canal d'allocation ODUCn et d'obtenir les données ODUj combinées, le procédé comprend en outre ce qui suit :
ajuster une largeur de bit de données de partage de temps ODUk dans les données ODUk d'une largeur de bit d'allocation ODUk à une largeur de bit du service ODUCn.

3. Procédé selon la revendication 1, dans lequel le procédé comprend en outre, avant d'affecter au service ODUk les données ODUj réparties sur les canaux d'affectation ODUk, ce qui suit :
compter les données valides dans les données ODUj, filtrer les données ODUj et obtenir un taux de lissage selon une période de lissage prédéfinie ; et
lisser des données de répartition temporelle ODUj dans les données ODUj réparties sur les canaux d'affectation ODUk à l'aide du taux de lissage.

4. Procédé selon la revendication 1, dans lequel le procédé comprend en outre, avant l'association des données ODUj combinées au service ODUCn, ce qui suit :
convertir une largeur de bit de signal de débit des données ODUj combinées en une largeur de bit de signal de débit des données ODUCn.

5. Dispositif de planification de service d'unité de données de canal optique (ODU), comprenant : un module de distribution de ports, un module d'affectation ODUk, un module de combinaison et un module d'affectation ODUCn ;
dans lequel le module de distribution de ports est adapté pour détecter une valeur n d'un ODUCn, et distribuer des données ODUj d'ordre inférieur de manière à ce qu'elles soient associées à un nombre n de canaux d'association ODUk et à un canal d'association ODUCn ;
le module d'affectation ODUk est conçu pour affecter les données ODUj réparties sur les canaux d'affectation ODUk à un service ODUk et pour fournir en sortie des données ODUk ;
le module de combinaison est adapté pour combiner les données ODUk et les données ODUj réparties sur les canaux d'attribution ODUCn et pour obtenir des données ODUj combinées ; et
le module d'attribution ODUCn est adapté pour attribuer les données ODUj combinées à un service ODUCn et pour attribuer les données ODUj réparties sur le canal d'attribution ODUCn au service ODUCn,
dans lequel le dispositif comprend en outre un premier module de conversion adapté pour
déterminer une largeur de bit d'allocation ODUk selon un signal d'horloge et un débit binaire du service ODUk ; et
ajuster une largeur de bit de données de répartition temporelle ODUj dans les données ODUj réparties sur les canaux d'allocation ODUk, conformément à la largeur de bit d'allocation ODUk.

6. Dispositif selon la revendication 5, comprenant en outre un deuxième module de conversion adapté pour
ajuster une largeur de bit des données de partage du temps (ODUk) dans les données ODUk d'une largeur de bit d'association ODUk à une largeur de bit du service ODUCn.

7. Dispositif selon la revendication 5, comprenant en outre un module de lissage adapté pour
compter les données valides dans les données ODUj, filtrer les données ODUj et obtenir un taux de lissage selon une période de lissage prédéfinie ; et
lisser des données de répartition temporelle ODUj dans les données ODUj réparties sur les canaux d'affectation ODUk à l'aide du taux de lissage.

8. Dispositif selon la revendication 5, comprenant en outre un troisième module de conversion adapté pour
convertir une largeur de bit de signal de débit des données ODUj combinées en une largeur de bit de signal de débit des données ODUCn.

9. Support de stockage informatique adapté pour stocker des instructions exécutables par ordinateur pour l'exécution du procédé de planification de service ODU selon l'une quelconque des revendications 1 à 4.
